# EUROPEAN PATENT SPECIFICATION

(11) **EP 1 667 442 B1**
(45) Date of publication and mention of the grant of the patent: **19.05.2010**
(21) Application number: 04028606.4
(22) Date of filing: 02.12.2004
(51) Int. Cl.: H04N 5/44, H04N 5/93, H04N 7/01

(54) **De-interlacing for video reproduction**
Zeilensprungverfahrenaufhebung für Videowiedergabe
Désentrelacage pour la réproduction de vidéo

(43) Date of publication of application: 07.06.2006
(73) Proprietor: Harman Becker Automotive Systems GmbH, 76307 Karlsbad (DE)
(72) Inventor: Maier, Michael, 78054 VS-Schwenningen (DE); Teichner, Detlef, 78126 Königsfeld (DE); Weisser, Pirmin, 78052 VS-Villingen (DE); Menzl, Thomas, 78048 VS-Villingen (DE)
(74) Representative: Grünecker, Kinkeldey, Stockmair & Schwanhäusser Anwaltssozietät

(56) References cited:
- US-A- 5 864 369
- US-B1- 6 515 706

## Description

The present invention relates to a de-interlaced reproduction of video data from DVDs. In particular, the present invention relates to a method and apparatus for reproducing fields of an interlaced video sequence in de-interlaced form.

With the increasing spread of DVDs as a storage medium for video data, DVD players are in wide-spread use for reproducing video data. DVD players are either used in form of stand alone devices or integrated into larger entertainment systems. Most of the video data is stored on DVDs in form of an interlaced video sequence consisting of a plurality of subsequent fields. Each field only contains approximately half the number of lines of a complete frame. A consecutive pair of odd and even fields can thus be synthesized into a complete frame.

Video sequences recorded in accordance with the PAL television standard are made up of 50 fields per second, NTSC video sequences comprise 60 fields per second. Both television standards further differ in the number of lines of a complete image. While the PAL standard defines each complete image to include 575 lines, a complete NTSC image is made up of 480 lines.

Most video sequences are recorded on DVDs in interlaced form. During display of interlaced images, only half of the pixel information of a complete image is provided by each field. In order to achieve a reproduction with improved picture quality, more and more DVD players are adapted to output interlaced video data in progressive form, i.e. to up-convert each field into a complete frame. Progressive images enable to display 50 frames per second for PAL video sequences instead of 50 fields (60 frames/fields for NTSC video sequences). For this purposes, DVD players are equipped with a progressive scan output terminal.

In order to allow more data and higher resolutions to be displayed, a de-interlacing is required to convert an interlaced video content to a progressive display format. The two most simple and common methods for de-interlacing are WEAVE and BOB:
- the WEAVE de-interlacing combines two consecutive fields to one frame, and
- the BOB de-interlacing creates a frame from a single field by line doubling.

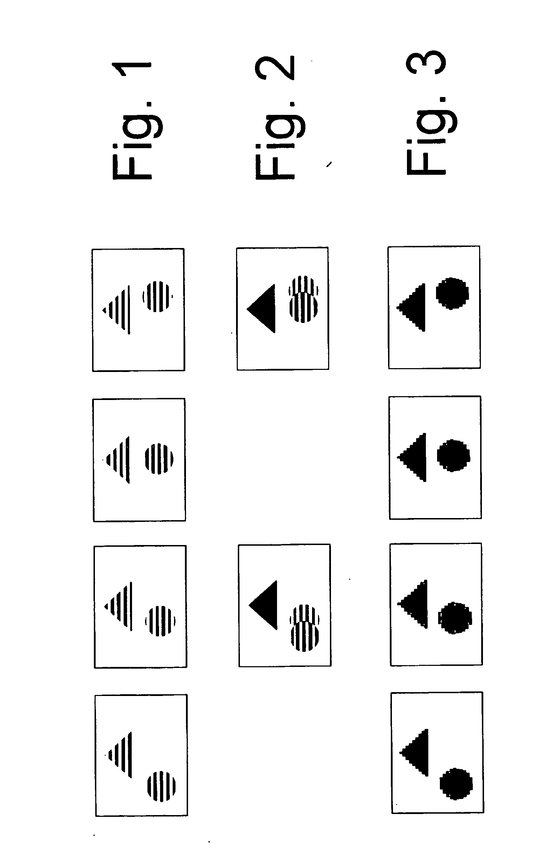

The different approaches of WEAVE and BOB de-interlacing techniques is illustrated in Figures 1 to 3. Fig. 1 illustrates an example of an interlaced video sequence. Each field includes in alternate manner half of the lines of a complete frame. For demonstrating the particular advantages and disadvantages of both de-interlacing techniques, the interlaced video sequence of Fig. 1 includes a stationary triangle and a moving circle as image content.

The visual artifacts created by the WEAVE de-interlacing is illustrated in Fig. 2. While the vertical resolution of the stationary triangle is increased, the shape of moving objects is made up of the shapes of two different motion phases of the moving object. Thus, the WEAVE de-interlacing creates feathering or combining artifacts at the edges of moving objects.

The results achieved by BOB de-interlacing is illustrated in Fig. 3. While the motion phases of the moving objects are correctly represented, the additional image details which are only available from the other field are not present in the BOB images. Further, a BOB de-interlacing creates flicker at thin horizontal lines.

More advanced de-interlacing approaches can improve the WEAVE and BOB de-interlacing algorithms by employing motion compensation for the WEAVE de-interlacing and a filtering for BOB de-interlacing instead of a simple line doubling. In addition, an adaptive switching between WEAVE and BOB can be applied in order to appropriately apply the respective de-interlacing depending on the image content of the current image.

US 5 864 369 disclosed a de-interlacing method and apparatus using BOB and WEAVE algorithms, chosen on the basis of image data calculation and comparison with a threshold.

It is the drawback of such improved de-interlacing approaches that the picture quality improvement is achieved at the expense of increased hardware complexity. In particular, motion determination is required in order to analyze the image content and to reliably apply a WEAVE de-interlacing only if no motion is present in the fields to be combined.

The present invention aims to enable an improved de-interlacing in a simple manner. Hence, it is the object of the present invention to provide an improved method of reproducing fields of an interlaced video sequence from a storage medium and a corresponding reproduction device.

This is achieved by the features of the independent claims.

According to a first aspect of the present invention, a method of reproducing fields of an interlaced video sequence from a storage medium is provided. The reproduction is controlled in accordance with a user actuated reproduction function. The method applies one of at least two de-interlacing algorithms. A de-interlacing algorithm is selected in accordance with a currently actuated reproduction function.

According to a further aspect of the present invention, a reproduction device for reproducing fields of an interlaced video sequence from a storage medium is provided. The reproduction device comprises a controller, a de-interlacing unit and a selector. The controller controls a reproduction in accordance with a user actuated reproduction function. The de-interlacing unit applies one of at least two different de-interlacing algorithms. The selector selects a de-interlacing algorithm in accordance with a currently actuated reproduction function.

It is the particular approach of the present invention to control the application of a de-interlacing algorithm based on the operation of the reproduction device. Accordingly, the application of an appropriate de-interlacing algorithm can be controlled in a simplified manner by maintaining an improved picture quality which is conventionally only achievable by complex hard- or software configurations. The present invention enables the selection of an appropriate de-interlacing algorithm without the need to apply any image content analysis. Thus, the computational and hardware effort conventionally required for the selection of an appropriate de-interlacing algorithm becomes un-necessary.

Preferably, one of the de-interlacing algorithm is the WEAVE algorithm. The WEAVE algorithm combines consecutive fields to provide a frame of increased vertical resolution.

Preferably, the de-interlacing algorithms includes the BOB algorithm. The BOB algorithm doubles each line of a single field. By applying the BOB algorithm, the number of lines is increased while the motion phase of a moving object, in particular, the object shape, is preserved.

According to preferred embodiments, the storage medium is an optical storage medium, in particular a CD, a DVD or a high density DVD.

According to another preferred embodiment, the storage medium is a magnetic storage medium, in particular a hard disk drive, or the storage medium is a flash memory.

According to a further alternative embodiment, the reproduction device is adapted for reproducing video data for any kind of the above-mentioned storage medium.

The user actuated reproduction functions preferably include at least one of the functions PLAY, FAST FORWARD, REVERSE, STOP, PAUSE, MENU and navigation. These functions relate to the reproduction of different kinds of image content. It is important to note that some of these functions always initiate a reproduction of still images. Consequently, those functions reliably relating to a still image reproduction can be associated to a de-interlacing algorithm of high picture quality by combining subsequent fields.

Preferably, a de-interlacing algorithm preserving motion phases of a moving object, in particular, a BOB de-interlacing, is selected for the user actuated reproduction functions PLAY, FAST FORWARD and REVERSE.

Further, a WEAVE de-interlacing is selected for the user actuated reproduction functions STOP, PAUSE, MENU and navigation. These reproduction functions generally only provide a still image for display on a display device. Accordingly, an appropriate de-interlacing algorithm is selected in an efficient manner without analysis of the currently reproduced image content.

Preferred embodiments of the present invention are the subject matter of dependent claims.

Other embodiments and advantages of the present invention will become more apparent from the following description of preferred embodiments, in which:
- Fig. 1: illustrates four fields of an interlaced video sequence,
- Fig. 2: illustrates de-interlaced images which have been de-interlaced by applying the WEAVE algorithm,
- Fig.3: illustrates a de-interlaced video sequence by applying a BOB de-interlacing,
- Fig. 4: illustrates a front view of a DVD player housing including a number of front panel controls,
- Fig. 5: is flow chart of a method for selecting an appropriate de-interlacing algorithm in accordance with the present invention,
- Fig. 6: illustrates the arrangement of a vehicle entertainment system in a vehicle,
- Fig. 7: illustrates in block diagram form components of a vehicle entertainment system linked by a communication network, and
- Fig. 8: illustrates in block diagram form a video reproduction device in accordance with the present invention.

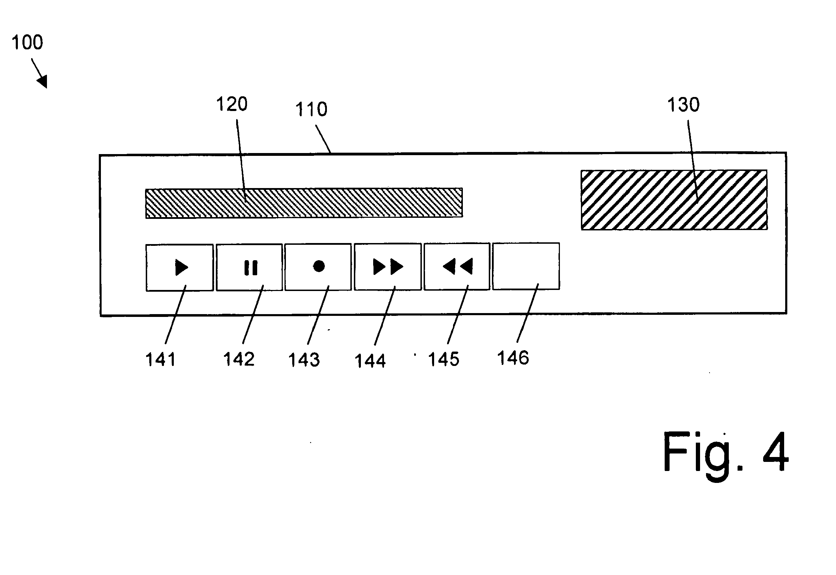

The present invention is preferably implement in devices, such as DVD players, reproducing interlaced video data from optical or magnetic storage media. A DVD player's front view is illustrated by way of example in Fig. 4. The housing 110 of DVD player 100 has at its front side a moveable tray 120 for loading a disk into the player. Front panel controls 141 - 146 (which are only illustrated as an example for any kind of possible control buttons) initiate a particular operating function upon user actuation. Specific operating information may be displayed in display 130.

It is to be noted that the operating functions of DVD player 100 are preferably actuated by means of a remote control (not shown). Such a remote control generally provides additional functions for controlling the DVD player's operation. Although the following description mainly refers to the DVD player as illustrated in Fig. 4, the skilled person is aware that the described functionality can also initiated by using a remote control.

The front panel controls 141 - 146 include a PLAY button 141, a PAUSE button 142, a STOP button 143, a FAST FORWARD 144 and a REVERSE button 145. Button 146 indicates that additional buttons having other functions may be further provided on the DVD player's front panel.

The reproduction of video content can be started by actuating the PLAY button 141. The actuation of PLAY button 141 is not always required to initiate reproduction. Most DVD players begin a reproduction automatically when a CD or DVD is inserted. Some titles only start by displaying a menu from which particular items may be selected, in particular "play movie" (or similar) to start the playback.

By pressing the PAUSE button 142, playback is paused. To resume playback, the PLAY button 141 or the PAUSE 142 is to be actuated again. Playback is stopped by actuating the STOP button 143.

The FAST PLAY buttons 142, 145 actuate a fast forward or backward play. Depending on the individual implementation, different fast playback speeds may be switched upon pressing the FAST PLAY button repeatedly.

Preferably, additional control buttons may only be provided on a remote control. Such additional buttons may relate to DVD navigation functions, for instance, a cursor pad or navigation buttons and a MENU or MAIN MENU button. In particular, upon actuation of the MENU button the DVD reproduction immediately returns to the DVD's disk menu. It is to be noted that the use of the individual navigation buttons depends on the navigation menu which is specific to each disk and may vary for each title. Typically, a navigation menu offers facility to select chapters, languages and view extra material such as trailers or documentaries. Once the menu has been accessed, the use of a cursor pad or the navigation buttons enable to move around the menu and select individual items therefrom.

The DVD player 100 outputs de-interlaced image data to a progressive scan terminal (not shown) for display on a display device. Alternatively, the DVD player may be part of a larger entertainment system, for instance, a vehicle entertainment system and the de-interlaced video data is applied internally to a display screen.

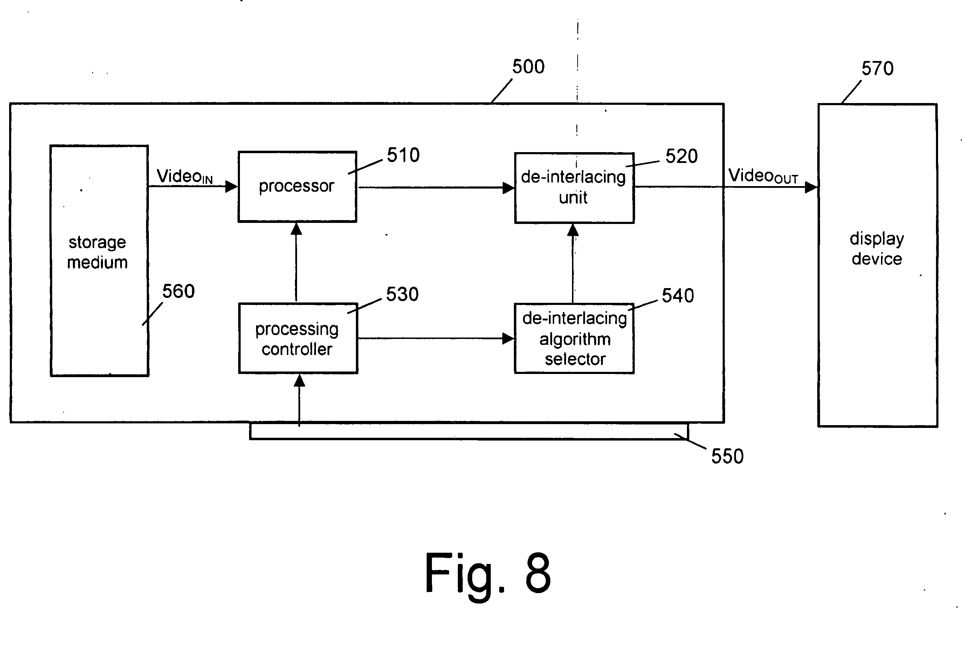

An example configuration of a video data reproduction device, in particular a DVD player is illustrated in a block diagram form in Fig. 8. The reproduction device 500 includes a video data storage medium 560, an image processor 510 and a de-interlacing unit 520. The video data output from de-interlacing unit 520 is applied to a display device 570 for reproduction thereon.

In order to control the image processing, in particular the reproduction operation performed by image processor 510, a front panel 550 is provided. As already described in connection with Fig. 4, such a front panel comprises front panel controls for initiating a particular operating function. Although not illustrated in Fig. 8, front panel 550 can be replaced or supplemented by a remote control providing corresponding control operations.

Based on the user operated front panel controls, controller 530 initiates the respective processing operation by supplying respective commands to image processor 510. Accordingly, the image processor may, for instance, start to read video data from storage medium 560 to be reproduced, either with normal or increased reproduction speed.

Conventionally, de-interlacing unit 520 applies either a single de-interlacing algorithm or, alternatively, selects an appropriate de-interlacing algorithm depending on supplemental information accompanying the video data. Motion vectors may for instance represent such supplemental information underlying the de-interlacing algorithm selection.

According to the present invention, the selection of an appropriate de-interlacing algorithm is not based on the image data or information accompanying the image data. In contrast, selector 540 of the present invention is connected to controller 530 in order to obtain the viewer's selected operating function. In accordance with the currently selected operating function, the appropriate de-interlacing algorithm is selected and de-interlacing unit 520 instructed correspondingly. Although not shown in Fig. 8, selector 540 does not need to be connected to controller 530, but may alternatively be connected directly to front panel 550 in order to obtain the user selected operation function.

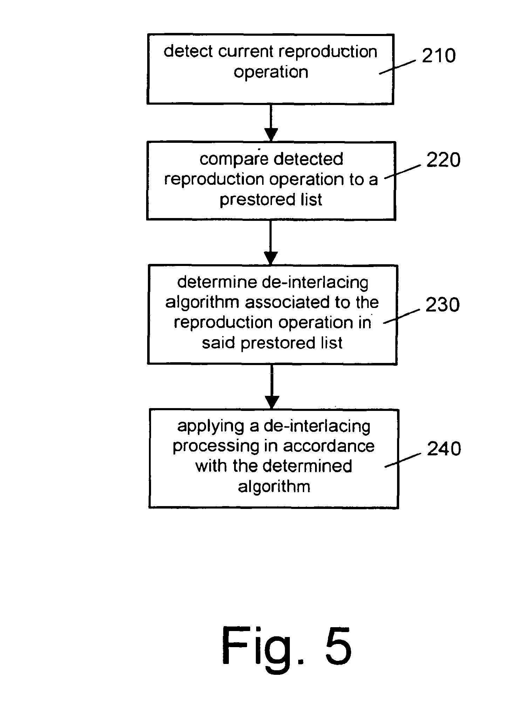

In accordance with the present invention, the de-interlacing is controlled depending on the current reproduction operation. A flow chart illustrating the operation of the present invention is shown in Fig. 5.

The current reproduction operation executed by DVD player 100 is detected in step 210. For this purpose, the operation of the DVD player 100 is monitored continuously in order to provide a respective detection signal. The detected reproduction operation is compared in step 220 to a pre-stored list of reproduction operations of DVD player 100. The list is pre-stored in a memory within the DVD player and includes the possible reproduction operations each of which associated with a respective de-interlacing algorithm. In accordance with the detected current reproduction operation, a respective de-interlacing algorithm is selected in step 230.

In accordance with the selected de-interlacing algorithm, a current video signal is processed (step 240) and output for display on a display device.

The de-interlacing algorithms preferably include a BOB and WEAVE de-interlacing. It is to be noted that the present invention is not limited to these two de-interlacing algorithms. A skilled person is aware, that there is a plurality of modified or other interlacing algorithms which may be provided and selected accordingly.

If only two de-interlacing algorithms are employed, the present invention may alternatively configured such that one of these two de-interlaced algorithms is set as a default de-interlacing algorithm. Consequently, only those operating functions need to be pre-stored and monitored which result in the application of the other de-interlacing algorithm.

A reproduction device in accordance with the present invention may also be built in a vehicle entertainment system. Automotive vehicles are increasingly equipped with on-board entertainment systems, in particular entertainment and information systems. Such entertainment systems consist of plurality of separate components linked by a communication network.

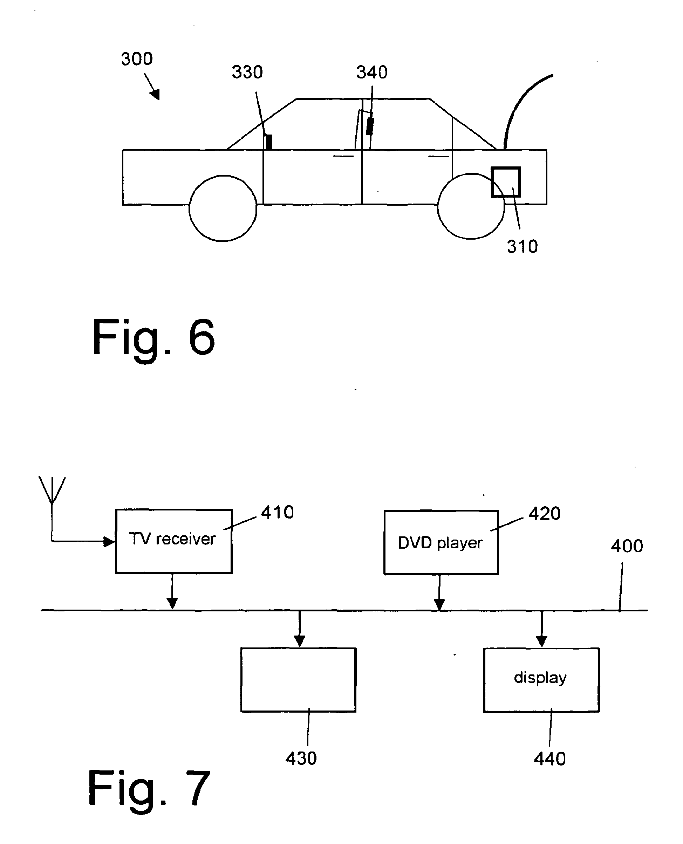

A vehicle equipped with vehicle entertainments systems is illustrated in Fig. 6. The different components of such a mobile entertainment system are distributed over distant locations within a vehicle 300. While the processing hardware including a DVD player is preferably mounted at the rear side of the vehicle or in proximity to the driver's seat, display devices 330, 340 for the reproduction of video data are mounted on the vehicle's dash board and in or between the front seats for the rear seat passengers.

The general configuration of a vehicle entertainment system in block diagram form is shown in Fig. 7. All components 410 - 440 of the vehicle entertainment system are interconnected by a communication link 400. In particular, a DVD player 420 and/or a television receiver 410 transmit video data over the communication link 400 to a display device 440 for reproduction of video data thereon.

The communication link 400 is preferably a vehicle communication network for interconnection of a plurality of entertainment components 410, 420, 430, 440. The communication link is preferably implemented in accordance with the MOST standard.

Summarizing, the present invention relates to the reproduction of video data from a storage medium with increased picture quality. For this purpose, interlaced video data is subjected to a de-interlacing processing. In order to avoid an image content analysis for adaptively switching between different de-interlacing algorithms, the present invention monitors the currently actuated operating function of the reproduction device and selects the applied de-interlacing algorithm accordingly. A video reproduction of interlaced video data with increased picture quality is accordingly achieved in a simple and efficient manner.

## Claims

1. A method of reproducing fields of an interlaced video sequence from a storage medium, said reproduction being controlled in accordance with a user actuated reproduction function and said method applying one of at least two different de-interlacing algorithms
**characterized by** the step of
selecting a de-interlacing algorithm in accordance with a currently actuated reproduction function.

2. A method according to claim 1, wherein said de-interlacing algorithms include a WEAVE algorithm combining two consecutive fields.

3. A method according to claim 1 or 2, wherein said de-interlacing algorithms include a BOB algorithm doubling each line of a single field.

4. A method according to any of claims 1 to 3, wherein said storage medium is an optical storage medium.

5. A method according to claim 4, wherein said optical storage medium is a CD, DVD, or HD-DVD.

6. A method according to any of claims 1 to 5, wherein said storage medium is a magnetic storage medium.

7. A method according to claim 6, wherein said magnetic storage medium is a hard disc drive.

8. A method according to any of claims 1 to 7, wherein said storage medium is a flash memory.

9. A method according to any of claims 1 to 8, wherein said user actuated reproduction functions include at least one of the functions PLAY, FAST FORWARD, REVERSE, STOP, PAUSE, MENU, and navigation.

10. A method according to claim 9, wherein said selection step selects a BOB de-interlacing for at least one of the user actuated reproduction functions PLAY, FAST FORWARD, and REVERSE.

11. A method according to claim 9 or 10, wherein said selection step selects a WEAVE de-interlacing for at least one of the user actuated reproduction functions STOP, PAUSE, MENU, and navigation.

12. A method according to any of claims 1 to 11, further comprising the step of detecting a currently actuated reproduction function based on the operation of control buttons of the reproduction device or its remote control.

13. A reproduction device for reproducing fields of an interlaced video sequence from a storage medium (560), comprising:
a controller (530) for controlling a reproduction in accordance with a user actuated reproduction function, and
a de-interlacing unit (520) for applying one of at least two different de-interlacing algorithms
**characterized by**
a selector (540) for selecting a de-interlacing algorithm in accordance with a currently actuated reproduction function.

14. A reproduction device according to claim 13, wherein said de-interlacing algorithms include a WEAVE algorithm combining two consecutive fields.

15. A reproduction device according to claim 13 or 14, wherein said de-interlacing algorithms include a BOB algorithm doubling each line of a single field.

16. A reproduction device according to any of claims 13 to 15, wherein said storage medium (560) is an optical storage medium.

17. A reproduction device according to claim 16, wherein said reproduction device is a CD, DVD or HD-DVD player.

18. A reproduction device according to any of claims 13 to 17, wherein said storage medium (560) is a magnetic storage medium.

19. A reproduction device according to claim 18, wherein said reproduction device is a hard disc video recorder.

20. A reproduction device according to any of claims 13 to 19, wherein said storage medium (560) is a flash memory.

21. A reproduction device according to any of claims 13 to 20, wherein said user actuated reproduction functions include at least one of the functions PLAY, FAST FORWARD, REVERSE, STOP, PAUSE, MENU, and navigation.

22. A reproduction device according to claim 21, wherein said selector (540) selects a BOB de-interlacing for at least one of the user actuated reproduction functions PLAY, FAST FORWARD, and REVERSE.

23. A reproduction device according to claim 21 or 22, wherein said selector (540) selects a WEAVE de-interlacing for at least one of the user actuated reproduction functions STOP, PAUSE, MENU, and navigation.

24. A vehicle entertainment system comprising a reproduction device according to any of claims 13 to 23 and a display device (570) for displaying said de-interlaced images.

## Patentansprüche

1. Verfahren zur Wiedergabe von Halbbildern einer Videosequenz nach dem Zeilensprungverfahren aus einem Speichermedium, wobei die Wiedergabe in Übereinstimmung mit einer benutzeraktivierten Wiedergabefunktion gesteuert wird und das Verfahren einen von mindestens zwei unterschiedlichen Zeilenentflechtungsalgorithmen anwendet,
**gekennzeichnet durch** den Schritt des
Auswählens eines Zeilenentflechtungsalgorithmus in Übereinstimmung mit einer aktuell aktivierten Wiedergabefunktion.

2. Verfahren nach Anspruch 1, wobei der Zeilenentflechtungsalgorithmus einen zwei aufeinanderfolgende Halbbilder kombinierenden WEAVE Algorithmus umfasst.

3. Verfahren nach Anspruch 1 oder 2, wobei der Zeilenentflechtungsalgorithmus einen jede Zeile eines Halbbildes verdoppelnden BOB Algorithmus umfasst.

4. Verfahren nach einen der Ansprüche 1 bis 3, wobei das Speichermedium ein optisches Speichermedium ist.

5. Verfahren nach Anspruch 4, wobei das optische Speichermedium eine CD, DVD oder HD-DVD ist.

6. Verfahren nach einem der Ansprüche 1 bis 5, wobei das Speichermedium ein magnetisches Speichermedium ist.

7. Verfahren nach Anspruch 6, wobei das magnetische Speichermedium eine Festplatte ist.

8. Verfahren nach einem der Ansprüche 1 to 7, wobei das Speichermedium ein Flash-Speicher ist.

9. Verfahren nach einem der Ansprüche 1 bis 8, wobei die benutzeraktivierte Wiedergabefunktion mindestens eine der Funktionen PLAY, FAST FORWARD, REVERSE, STOP, PAUSE, MENU und Navigation umfasst.

10. Verfahren nach Anspruch 9, wobei der Auswahl-Schritt eine BOB Zeilenentflechtung für mindestens eine der benutzeraktivierten Wiedergabefunktionen PLAY, FAST FORWARD oder REVERSE auswählt.

11. Verfahren nach Anspruch 9 oder 10, wobei der Auswahlschritt eine WEAVE Zeilenentflechtung für mindestens eine der benutzeraktivierten Wiedergabefunktionen STOP, PAUSE, MENU oder Navigation auswählt.

12. Verfahren nach einem der Ansprüche 1 bis 11, das des Weiteren einen Detektionsschritt einer aktuell aktivierten Wiedergabefunktion basierend auf der Betätigung von Steuertasten der Wiedergabevorrichtung oder ihrer Fernsteuerung umfasst.

13. Vorrichtung zur Wiedergabe von Halbbildern einer Videosequenz nach dem Zeilensprungverfahren aus einem Speichermedium (560) umfasend:
eine Steuerung (530) zum Steuern einer Wiedergabe in Übereinstimmung mit einer benutzeraktivierten Wiedergabefunktion und
eine Zeilenentflechtungseinheit (520) zum Anwenden eines von mindestens zwei unterschiedlichen Zeilenentflechtungsalgorithmen,
**gekennzeichnet durch**
eine Auswahlseinheit (540) zum Auswählen eines
Zeilenentflechtungsalgorithmus in Übereinstimmung mit einer aktuell aktivierten Wiedergabefunktion.

14. Vorrichtung nach Anspruch 13, wobei der Zeilenentflechtungsalgorithmus einen zwei aufeinanderfolgende Halbbilder kombinierenden WEAVE Algorithmus umfasst.

15. Vorrichtung nach Anspruch 13 oder 14, wobei der Zeilenentflechtungsalgorithmus einen jede Zeile eines Halbbildes verdoppelnden BOB Algorithmus umfasst.

16. Vorrichtung nach einem der Ansprüche 13 bis 15, wobei das Speichermedium (560) ein optisches Speichermedium ist.

17. Vorrichtung nach Anspruch 16, wobei das optische Speichermedium eine CD, DVD oder HD-DVD ist.

18. Vorrichtung nach einem der Ansprüche 13 bis 17, wobei das Speichermedium (560) ein magnetisches Speichermedium ist.

19. Vorrichtung nach Anspruch 18, wobei das magnetische Speichermedium eine Festplatte ist.

20. Vorrichtung nach einem der Ansprüche 13 to 19, wobei das Speichermedium ein Flash-Speicher ist.

21. Vorrichtung nach einem der Ansprüche 13 bis 20, wobei die benutzeraktivierte Wiedergabefunktion mindestens eine der Funktionen PLAY, FAST FORWARD, REVERSE, STOP, PAUSE, MENU und Navigation umfasst.

22. Vorrichtung nach Anspruch 21, wobei der Auswahl-Schritt eine BOB Zeilenentflechtung für mindestens eine der benutzeraktivierten Wiedergabefunktionen PLAY, FAST FORWARD oder REVERSE auswählt.

23. Vorrichtung nach Anspruch 21 oder 22, wobei der Auswahl-Schritt eine WEAVE Zeilenentflechtung für mindestens eine der benutzeraktivierten Wiedergabefunktionen STOP, PAUSE, MENU oder Navigation/Führung auswählt.

24. Fahrzeugsunterhaltungssystem umfassend eine Wiedergabevorrichtung nach einem der Ansprüche 13 bis 23 und eine Anzeigeeinheit (570) zum Anzeigen des Bildes mit entflechteten Zeilen.

## Revendications

1. Procédé de reproduction de champs d'une séquence vidéo entrelacée à partir d'un support d'enregistrement, ladite reproduction étant contrôlée conformément à une fonction de reproduction actionnée par un utilisateur et ledit procédé appliquant un d'au moins deux algorithmes de désentrelacement différents,
**caractérisé par** l'étape consistant à
sélectionner un algorithme de désentrelacement conformément à une fonction de reproduction actuellement actionnée.

2. Procédé selon la revendication 1, dans lequel lesdits algorithmes de désentrelacement comprennent un algorithme WEAVE combinant deux champs consécutifs.

3. Procédé selon la revendication 1 ou 2, dans lequel lesdits algorithmes de désentrelacement comprennent un algorithme BOB qui double chaque ligne d'un champ individuel.

4. Procédé selon l'une quelconque des revendications 1 à 3, dans lequel ledit support d'enregistrement est un support d'enregistrement optique.

5. Procédé selon la revendication 4, dans lequel ledit support d'enregistrement optique est un CD, DVD ou HD-DVD.

6. Procédé selon l'une quelconque des revendications 1 à 5, dans lequel ledit support d'enregistrement est un support d'enregistrement magnétique.

7. Procédé selon la revendication 6, dans lequel ledit support d'enregistrement magnétique est un disque dur.

8. Procédé selon l'une quelconque des revendications 1 à 7, dans lequel ledit support d'enregistrement est une mémoire flash.

9. Procédé selon l'une quelconque des revendications 1 à 8, dans lequel lesdites fonctions de reproduction actionnées par un utilisateur comprennent au moins l'une des fonctions suivantes, soit LECTURE, AVANCE RAPIDE, RETOUR, STOP, PAUSE, MENU et navigation.

10. Procédé selon la revendication 9, dans lequel ladite étape de sélection sélectionne un désentrelacement BOB pour au moins une des fonctions de reproduction actionnées par un utilisateur suivantes, soit LECTURE, AVANCE RAPIDE et RETOUR.

11. Procédé selon la revendication 9 ou 10, dans lequel ladite étape de sélection sélectionne un désentrelacement WEAVE pour au moins une des fonctions de reproduction actionnées par un utilisateur suivantes, soit STOP, PAUSE, MENU et navigation.

12. Procédé selon l'une quelconque des revendications 1 à 11, comprenant en outre l'étape consistant à détecter une fonction de reproduction actuellement actionnée sur la base de l'actionnement de boutons de commande du dispositif de reproduction ou de sa télécommande.

13. Dispositif de reproduction de champs d'une séquence vidéo entrelacée à partir d'un support d'enregistrement (560), comprenant :
un contrôleur (530) pour contrôler une reproduction conformément à une fonction de reproduction actionnée par un utilisateur, et
une unité de désentrelacement (520) pour appliquer un d'au moins deux algorithmes de désentrelacement différents
**caractérisé par**
un sélecteur (540) pour sélectionner un algorithme de désentrelacement conformément à une fonction de reproduction actuellement actionnée.

14. Dispositif de reproduction selon la revendication 13, dans lequel lesdits algorithmes de désentrelacement comprennent un algorithme WEAVE combinant deux champs consécutifs.

15. Dispositif de reproduction selon la revendication 13 ou 14, dans lequel lesdits algorithmes de désentrelacement comprennent un algorithme BOB qui double chaque ligne d'un champ individuel.

16. Dispositif de reproduction selon l'une quelconque des revendications 13 à 15, dans lequel ledit support d'enregistrement (560) est un support d'enregistrement optique.

17. Dispositif de reproduction selon la revendication 16, dans lequel ledit dispositif de reproduction est un lecteur CD, DVD ou HD-DVD.

18. Dispositif de reproduction selon l'une quelconque des revendications 13 à 17, dans lequel ledit support d'enregistrement (560) est un support d'enregistrement magnétique.

19. Dispositif de reproduction selon la revendication 18, dans lequel ledit dispositif de reproduction est un enregistreur vidéo à disque dur.

20. Dispositif de reproduction selon l'une quelconque des revendications 13 à 19, dans lequel ledit support d'enregistrement (560) est une mémoire flash.

21. Dispositif de reproduction selon l'une quelconque des revendications 13 à 20, dans lequel lesdites fonctions de reproduction actionnées par un utilisateur comprennent au moins l'une des fonctions suivantes, soit LECTURE, AVANCE RAPIDE, RETOUR, STOP, PAUSE, MENU et navigation.

22. Dispositif de reproduction selon la revendication 21, dans lequel ledit sélecteur (540) sélectionne un désentrelacement BOB pour au moins une des fonctions de reproduction actionnées par un utilisateur suivantes, soit LECTURE, AVANCE RAPIDE et RETOUR.

23. Dispositif de reproduction selon la revendication 21 ou 22, dans lequel ledit sélecteur (540) sélectionne un désentrelacement WEAVE pour au moins une des fonctions de reproduction actionnées par un utilisateur suivantes, soit STOP, PAUSE, MENU et navigation.

24. Système de divertissement pour véhicule, comprenant un dispositif de reproduction selon l'une quelconque des revendications 13 à 23 et un dispositif d'affichage (570) pour afficher lesdites images désentrelacées.
